Europäisches Patentamt

European Patent Office

Office européen des brevets

(11) Veröffentlichungsnummer: **0 260 520 B1**

(12) **EUROPÄISCHE PATENTSCHRIFT**

(45) Veröffentlichungstag der Patentschrift: **04.03.92**

(51) Int. Cl.⁵: $H01F\ 1/11$, $C01G\ 49/02$

(21) Anmeldenummer: **87112713.0**

(22) Anmeldetag: **01.09.87**

(54) **Magnetische Eisenoxidpigmente sowie Verfahren zu ihrer Herstellung.**

(30) Priorität: **13.09.86 DE 3631194**

(43) Veröffentlichungstag der Anmeldung:
**23.03.88 Patentblatt 88/12**

(45) Bekanntmachung des Hinweises auf die
Patenterteilung:
**04.03.92 Patentblatt 92/10**

(84) Benannte Vertragsstaaten:
**BE DE FR GB IT NL**

(56) Entgegenhaltungen:
DD-A- 209 353     DE-A- 2 235 383
DE-A- 2 526 363     DE-A- 2 811 473
DE-A- 2 829 344     DE-A- 2 903 593
DE-A- 3 038 989     DE-A- 3 228 021
DE-A- 3 344 299     DE-B- 2 347 486
GB-A- 2 131 783     US-A- 4 371 567

(73) Patentinhaber: **BAYER AG**

**W-5090 Leverkusen 1 Bayerwerk(DE)**

(72) Erfinder: **Kathrein, Hendrik, Dr.**
**Gürtelweg 4**
**W-4053 Jüchen-Aldenhofen(DE)**
Erfinder: **Kiemle, Peter, Dr.**
**Bärenstrasse 53a**
**W-4150 Krefeld-Traar(DE)**
Erfinder: **Rodi, Fritz, Dr.**
**Schwarzer Weg 41**
**W-4130 Moers 1(DE)**
Erfinder: **Eiling, Aloys, Dr.**
**Schmiedestrasse 12**
**W-4630 Bochum 6(DE)**

**Beschreibung**

Die vorliegende Erfindung betrifft magnetische Eisenoxidpigmente mit einer Beschichtung aus Cobalt-Verbindungen sowie Verfahren zur Herstellung dieser Eisenoxidpigmente.

$\gamma$-$Fe_2O_3$-Magnetpigmente besitzen Koerzitivkräfte bis zu etwa 31 kA/m. Ferrit-Magnetpigmente bis zu etwa 35 kA/m. Zur Erhöhung der Speicherdichte werden zur magnetischen Signalaufzeichnung im Audio-, Video- und Datenspeicherungsbereich zunehmend Magnetpigmente mit wesentlich höherer Koerzitivfeldstärke gefordert. Zur Erhöhung der Koerzitivfeldstärke magnetischer Eisenoxide sind verschiedene Verfahren bekannt.

Gemäß der DE-A 2 903 593 erhält man höher koerzitive Pigmente aus $\alpha$-FeOOH-Vorläuferverbindungen, die mit Cobalt dotiert sind. Dabei erreicht man durch 1 % Cobalt und einen FeO-Gehalt von 20 % eine Koerzitivfeldstärke von etwa 50 kA/m. Als nachteilig haben sich bei diesen Pigmenten die niedrige Kopierdämpfung, die ungenügende magnetische Stabilität und die hohe Temperaturabhängigkeit der Koerzitivkraft erwiesen.

Ein anderer Weg, zu hohen Koerzitivfeldstärken zu gelangen, ist in der DE-A 2 235 383 beschrieben. Dabei läßt man auf einen Kern aus magnetischem Eisenoxid in stark alkalischem Milieu eine Schicht von Cobaltferrit epitaktisch aufkristallisieren. Diese Pigmente zeigen gegenüber den cobaltdotierten Pigmenten bessere Werte der Kopierdämpfung und magnetischen Stabilität, lassen jedoch hinsichtlich der Schaltfeldverteilung, der Temperaturabhängigkeit der Koerzitivkraft und der in Bändern erreichbaren Löschdämpfungseigenschaften zu wünschen übrig. Pigmente mit besseren Eigenschaften lassen sich herstellen, wenn cobalt- bzw. eisenhaltige Verbindungen in mehreren Schichten auf den Kern aufgebracht werden, wie in DE-A 3 520 210 beschrieben.

In der DE-A 3 344 299 ist ein Verfahren zur Herstellung eines cobalthaltigen magnetischen Eisenoxidpulvers beschrieben, wobei das Eisenoxidausgangsmaterial zunächst mit einer Eisen(II)-Verbindung und danach mit einer Cobaltverbindung beschichtet wird, was zu einer Verbesserung der magnetischen Eigenschaften führt.

Die Aufgabe der vorliegenden Erfindung ist es nun, magnetische Eisenoxidpigmente mit hohen Koerzitivfeldstärken zur Verfügung zu stellen, die die beschriebenen Nachteile der dem Stand der Technik angehörenden magnetischen Eisenoxidpigmente nicht aufweisen.

Überraschenderweise wurde nun gefunden, daß die Schaltfeldverteilung, der Gehalt an hochkoerzitiven Bestandteilen und die Temperaturstabilität der Koerzitivkraft bei solchen mit einer Beschichtung aus Cobalt-Verbindungen versehenen magnetischen Eisenoxidpigmenten weiter verbessert werden kann, die dadurch erhältlich sind, daß vor der Cobaltbeschichtung der Eisenoxidpigmente eine Verbindung des zwei- und dreiwertigen Eisens aufgebracht wird.

Diese magnetischen Eisenoxidpigmente mit einer Beschichtung aus Cobalt-Verbindungen sind Gegenstand dieser Erfindung.

Sie sind dadurch gekennzeichnet, daß sie eine Temperaturabhängigkeit der Koerzitivkraft im Temperaturintervall von 76 K bis 298 K von kleiner als 0,13 kA/mK aufweisen und die Koerzitivkraft am auf 0,9 $g/cm^3$ verdichteten Pulver größer als 51 kA/m ist.

Vorzugsweise beträgt der Gehalt an Cobalt 2,5 bis 6 Gew.-%, bezogen auf das beschichtete magnetische Eisenoxid.

Gegenstand dieser Erfindung ist auch ein Verfahren zur Herstellung der erfindungsgemäßen Pigmente. Dieses Verfahren wird erfindungsgemäß so durchgeführt, daß ein magnetisches Eisenoxidkernmaterial der Zusammensetzung $FeO_x$ mit $1,33 < x < 1,5$ in einem ersten Schritt mit einer zwei- und dreiwertiges Eisens enthaltenden Verbindung, in der das Fe(III):Fe(II)-Verhältnis zwischen 0,01 und kleiner als 2 liegt, vorbelegt und in einem zweiten Schritt mit einer Cobaltverbindung beschichtet wird.

Als erfindungsgemäßes magnetisches Eisenoxidkernmaterial können $\gamma$-$Fe_2O_3$-, $Fe_3O_4$-Pigmente sowie berthollide Verbindungen mit einem FeO-Gehalt zwischen 0 und 30 % dienen. Diese Eisenoxide können dabei eines oder mehrere Begleitelemente aus der Gruppe P, Zn, B, Si, Sn, Ge, Al, Mn, Cr, Ni enthalten.

Die Beschichtung des Kernmaterials mit der Eisen(II)-(III)-Verbindung kann nach verschiedenen Verfahrensvarianten durchgeführt werden.

Besonders bevorzugt ist die Verfahrensvariante, bei der das Fe(III):Fe(II)-Verhältnis durch das verwendete Eisensalz eingestellt wird.

Das Eisenoxidkernmaterial wird dazu in Wasser dispergiert und mit einem Eisensalz, das zwischen 1 und 20 % Fe $^{III}$ (bezogen auf Gesamteisen), vorzugsweise zwischen 2 und 10 % Fe $^{III}$ enthält, oder seiner Lösung und einer Alkalilösung versetzt. Die Zugabe der Alkalilösung kann vor oder nach der Dispergierung bzw. vor oder nach Zugabe der Eisensalzlösung erfolgen.

Eine andere bevorzugte Ausführungsform des erfindungsgemäßen Verfahrens besteht darin, daß das

EP 0 260 520 B1

Fe(III):Fe(II)-Verhältnis durch eine definierte Oxidation von Fe(II) vor der Cobaltzugabe eingestellt wird.

Das Eisenoxidkernmaterial wird dazu in Wasser dispergiert, mit einem Eisen(II) enthaltenden Eisensalz oder dessen Lösung und einer Alkalilösung versetzt. Die Zugabe der Alkalilösung kann vor oder nach der Dispergierung bzw. vor oder nach der Zugabe der Eisensalzlösung erfolgen.

Anschließend wird durch Einleiten von Luft (oder von anderen Sauerstoff enthaltenden Gasmischungen) oder Zugabe von Oxidationsmitteln ein weiterer Teil des Fe $^{II}$ zu Fe $^{III}$ oxidiert. Die Oxidation der Suspension kann bei Temperaturen zwischen 20 ° C und dem Siedepunkt erfolgen.

Im Anschluß an die Auftragung der Eisenverbindung erfolgt die Auftragung der Cobaltverbindung durch Zugabe eines Cobaltsalzes zu der Pigmentsuspension. Die Beschichtung mit Cobalt kann unter oxidierenden oder inerten Bedingungen durchgeführt werden.

Die OH-Konzentration während der Beschichtung mit der Eisen-sowie der Cobaltverbindung beträgt 0,1 bis 10 Mol/l, vorzugsweise 0,3 bis 5 Mol/l.

Der Feststoffgehalt an Kernmaterial in der Suspension liegt zwischen 30 g/l und 200 g/l, vorzugsweise zwischen 50 und 150 g/l. Die aufgetragene Eisenoxidmenge entspricht 1 bis 25 % des eingesetzten Kernmaterials.

Die Aufarbeitung der Pigmentsuspension erfolgt durch Filtration, Waschen und Trocknen.

Im folgenden wird die Erfindung beispielhaft erläutert, ohne daß hierin eine Einschränkung der Erfindung zu sehen ist.

Zur Ermittlung der Eigenschaften der erfindungsgemäßen Eisenoxidpigmente im Band werden jeweils etwa 200 g des magnetischen Eisenoxidpigmentes in einen Lack auf Polyurethanbasis eingebracht, so daß der Volumenanteil des Eisenoxidpigmentes ca. 45 % beträgt. Die Dispersion wird 3 Stunden in einer Perlmühle gemahlen und danach auf eine Folie aus Polyester in dünner Schicht mit Hilfe einer Beschichtungsmaschine aufgetragen, in einem homogenen Magnetfeld von 80 kA/m ausgerichtet und bei 100 ° C ausgehärtet. Nach Schneiden des Bandes werden die folgenden Parameter ermittelt:

$I^H c$       Koerzitivkraft gemessen bei 398 kA/m

Br/Bs       remanente Magnetisierung/Sättigungsmagnetisierung

SFD       Schaltfeldverteilung

Beispiel 1

480 g des magnetischen Ferrit-Pigmentes Bayferrox® AC 5111 M - Handelsprodukt der Bayer AG (durchschnittliche Teilchenlänge 0,35 $\mu$m, spezifische Oberfläche 24 $m^2$/g, Koerzitivkraft 33,8 kA/m) werden mit einer Kotthoff-Mischsirene in 1920 ml Wasser dispergiert, anschließend mit einer Korundscheibenmühle gemahlen und in das mit einem Rührer ausgestattete Reaktionsgefäß überführt. Anschließend werden 600 ml Wasser, eine Lösung von 152,9 g $FeSO_4$ x 7 $H_2O$ und 4,0 g $Fe_2(SO_4)_3$ in 600 ml Wasser und 553 ml NaOH-Lösung (740 g NaOH/1) zugeführt. Der Fe(III)-Gehalt der $FeSO_4$-Lösung beträgt 3,5 % des Gesamteisens der Lösung. Nach 5 Minuten erfolgt die Zugabe einer Lösung von 80 g $CoSO_4$ x 7 $H_2O$ in 300 ml Wasser. Nach Aufheizen der Suspension auf 80 ° C wird weitere 3 Stunden mit Luft begast.

Die Aufarbeitung der Suspension erfolgt durch Filtration, Waschung und Trocknung bei 30 ° C im Umlufttrockenschrank.

Beispiel 2

480 g des magnetischen Ferrit-Pigmentes Bayferrox® AC 5111 M - Hendelsprodukt der Bayer AG (durchschnittliche Teilchenlänge 0,35 $\mu$m, spezifische Oberfläche 24 $m^2$/g, Koerzitivkraft 33,8 kA/m) werden mit einer Kotthoff-Mischsirene in 1920 ml Wasser dispergiert, anschließend mit einer Korundscheibenmühle gemahlen und in das mit einem Rührer ausgestattete Reaktionsgefäß überführt. Anschließend werden 600 ml Wasser, eine Lösung von 150,5 g $FeSO_4$ x 7 $H_2O$ und 4,0 g $Fe_2(SO_4)_3$ in 600 ml Wasser und 553 ml NaOH-Lösung (740 g NaOH/1) zugeführt. Der Fe(III)-Gehalt der $FeSO_4$-Lösung beträgt 5 % des Gesamteisens der Lösung. Nach 5 Minuten erfolgt die Zugabe einer Lösung von 80 g $CoSO_4$ x 7 $H_2O$ in 300 ml Wasser. Nach Aufheizen der Suspension auf 80 ° C wird weitere 3 Stunden mit Luft begast.

Die Aufarbeitung der Suspension erfolgt durch Filtration, Waschung und Trocknung bei 30 ° C im Umlufttrockenschrank.

Beispiel 3

480 g des magnetischen Ferrit-Pigmentes Bayferrox® AC 5111 M - Handelsprodukt der Bayer AG (durchschnittliche Teilchenlänge 0,35 $\mu$m, spezifische Oberfläche 24 $m^2$/g, Koerzitivkraft 33,8 kA/m) werden mit einer Kotthoff-Mischsirene in 1920 ml Wasser dispergiert, anschließend mit einer Korundscheibenmühle gemahlen und in das mit einem Rührer ausgestattete Reaktionsgefäß überführt. Anschließend werden 1 l Wasser, eine Lösung von 158,4 g $FeSO_4$ x 7 $H_2O$ in 600 ml Wasser und 553 ml NaOH-Lösung (740 g NaOH/l) zugeführt. Nach Aufheizen der Suspension auf 80° C wird 20 Minuten mit 20 l/h Luft begast. Nach Zugabe einer Lösung von 80 g $CoSO_4$ x 7 $H_2O$ in 300 ml Wasser, wird die Suspension weitere 3 Stunden mit 20 l/h Luft begast. Nach Aufheizen der Suspension auf 80° C wird weitere 3 Stunden mit Luft begast.

Die Aufarbeitung der Suspension erfolgt durch Filtration, Waschung und Trocknung bei 30° C im Umlufttrockenschrank.

Beispiel 4

480 g des magnetischen $\gamma$-$Fe_2O_3$-Pigmentes Bayferrox® AC 5108 M - Handelsprodukt der Bayer AG (durchschnittliche Teilchenlänge 0,3 $\mu$m, spezifische Oberfläche 30 $m^2$/g, Koerzitivkraft 31 kA/m) werden mit einer Kotthoff-Mischsirene in 1920 ml Wasser dispergiert, anschließend mit einer Korundscheibenmühle gemahlen und in das mit einem Rührer ausgestattete Reaktionsgefäß überführt. Anschließend werden 600 ml Wasser, eine Lösung von 175,6 g $FeSO_4$ x 7 $H_2O$ und 3,9 g $Fe_2(SO_4)_3$ in 600 ml Wasser und 632 ml NaOH-Lösung (740 g NaOH/l) zugeführt. Der Fe(III)-Gehalt der $FeSO_4$-Lösung beträgt 3 % des Gesamteisens der Lösung. Nach 5 Minuten erfolgt die Zugabe einer Lösung von 91,4 g $CoSO_4$ x 7 $H_2O$ in 300 ml Wasser. Nach Aufheizen der Suspension auf 80° C wird weitere 3 Stunden mit Luft begast.

Die Aufarbeitung der Suspension erfolgt durch Filtration, Waschung und Trocknung bei 30° C im Umlufttrockenschrank.

Vergleichsbeispiel 1

480 g des magnetischen Ferrit-Pigmentes Bayferrox® AC 5111 M - Handelsprodukt der Bayer AG (durchschnittliche Teilchenlänge 0,35 $\mu$m, spezifische Oberfläche 24 $m^2$/g, Koerzitivkraft 33,8 kA/m) werden mit einer Kotthoff-Mischsirene in 1920 ml Wasser dispergiert, anschließend mit einer Korundscheibenmühle gemahlen und in das mit einem Rührer ausgestattete Reaktionsgefäß überführt. Anschließend werden 600 ml Wasser, eine Lösung von 158,4 g $FeSO_4$ x 7 $H_2O$ in 600 ml Wasser und 553 ml NaOH-Lösung (740 g NaOH/l) zugeführt. Der Fe(III )-Gehalt der $FeSO_4$-Lösung ist kleiner als 0,1 % des Gesamteisens der Lösung. Nach 5 Minuten erfolgt die Zugabe einer Lösung von 80 g $CoSO_4$ x 7 $H_2O$ in 300 ml Wasser. Nach Aufheizen der Suspension auf 80° C wird weitere 3 Stunden mit Luft begast.

Die Aufarbeitung der Suspension erfolgt durch Filtration, Waschung und Trocknung bei 30° C im Umlufttrockenschrank.

Vergleichsbeispiel 2

480 g des magnetischen Ferrit-Pigmentes Bayferrox® AC 5111 M - Handelsprodukt der Bayer AG (durchschnittliche Teilchenlänge 0,35 $\mu$m, spezifische Oberfläche 24 $m^2$/g, Koerzitivkraft 33,8 kA/m) werden mit einer Kotthoff-Mischsirene in 1920 ml Wasser dispergiert, anschließend mit einer Korundscheibenmühle gemahlen und in das mit einem Rührer ausgestattete Reaktionsgefäß überführt. Anschließend werden 600 ml Wasser, eine Lösung von 144,9 g $FeSO_4$ x 7 $H_2O$ in 300 ml Wasser eine Lösung von 73,1 g $CoSO_4$ x 7 $H_2O$ in 600 ml Wasser und 506 ml NaOH-Lösung (740 g NaOH/l) zugefügt. Nach Aufheizen der Suspension auf 80° C wird weitere 3 Stunden mit Luft begast.

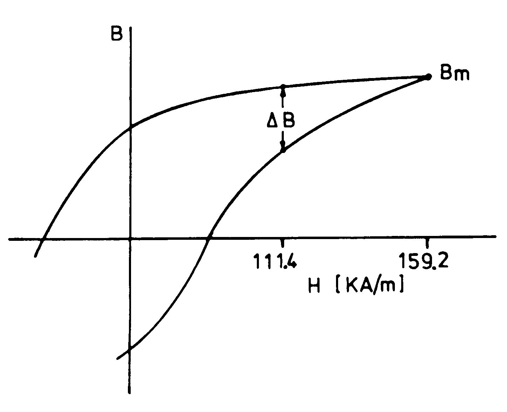

Dabei stellt das Verhältnis $\Delta$B/Bm ein Maß dar für den Anteil an hochkoerzitiven Bestandteilen. Die Berechnung des $\Delta$B/Bm-Wertes aus der gemessenen Hysteresekurve ist in Fig. 1 dargestellt.

<u>Tabelle 1</u>

| Bei-spiel | Kern Typ | BET* m²/g | Fe(III) | Pulver Br/ρ mWb.m/kg | Pulver $I^H{}_c$ kA/m | Pulver Bm/ρ mWb.m/kg | Band $I^H{}_c$ kA/m | Band Br/Bs | Band SFD | Band ΔB/Bm | Band Temperaturabhängigkeit der $I^H{}_c$ im Bereich von 76 bis 298 K (kA/m·K) |
|---|---|---|---|---|---|---|---|---|---|---|---|
| 1 | Ferrit | 28 | 3,5 % | 50,5 | 55,7 | 93,1 | 60,8 | 0,82 | 0,49 | 0,035 | 0,10 |
| 2 | Ferrit | 28 | 5 % | 52,7 | 55,7 | 96,9 | 61,4 | 0,89 | 0,42 | 0,020 | 0,10 |
| 3 | Ferrit | 28 | Luft-oxida-tion | 52,3 | 55,2 | 98,0 | 58,4 | 0,83 | 0,45 | 0,032 | 0,10 |
| V1 | Ferrit | 28 | 0 % | 52,0 | 58,3 | 98,1 | 60,4 | 0,86 | 0,51 | 0,055 | 0,14 |
| V2 | Ferrit | 28 | 0 % | 51,6 | 57,0 | 98,0 | 58,2 | 0,86 | 0,55 | 0,065 | 0,18 |

*) spezifische Oberfläche (BET - bestimmt nach der $N_2$-Einpunktmethode)

**Patentansprüche**

1. Magnetische Eisenoxidpigmente mit einer Beschichtung aus Cobalt-Verbindungen, dadurch gekennzeichnet, daß sie eine Temperaturabhängigkeit der Koerzitivkraft im Temperaturintervall von 76 K bis 298 K von kleiner als 0,13 kA/mK aufweisen und die Koerzitivkraft am auf 0,9 g/cm$^3$ verdichteten Pulver größer als 51 kA/m ist.

2. Magnetische Eisenoxide gemäß Anspruch 1, dadurch gekennzeichnet, daß der Gehalt an Cobalt 2,5 bis 6 Gew.-%, bezogen auf das beschichtete magnetische Eisenoxidpigment, beträgt.

3. Verfahren zur Herstellung der cobalthaltigen magnetischen Eisenoxidpigmente gemäß einem der Ansprüche 1 oder 2, dadurch gekennzeichnet, daß ein magnetisches Eisenoxidkernmaterial der Zusammensetzung $FeO_x$ mit 1,33 < x < 1,5 in einem ersten Schritt mit einer zwei- und dreiwertiges Eisen enthaltenden Verbindung, in der das Fe(III):Fe(II)-Verhältnis zwischen 0,01 und kleiner als 2 liegt, vorbelegt und in einem zweiten Schritt mit einer Cobaltverbindung beschichtet wird.

4. Verfahren gemäß Anspruch 3, dadurch gekennzeichnet, daß das Fe(III):Fe(II)-Verhältnis durch das verwendete Eisensalz eingestellt wird.

5. Verfahren gemäß Anspruch 3, dadurch gekennzeichnet, daß das Fe(III):Fe(II)-Verhältnis durch eine definierte Oxidation von Fe(II) vor der Cobaltzugabe eingestellt wird.

## Claims

1. Magnetic iron oxide pigments having a coating of cobalt compounds, characterized in that the dependence of their coercivity on temperture in the temperature range from 76 K to 298 K is less than 0.13 kA.mk and the coercivity as measured on powder compressed to 0.9 g/cm$^3$ is greater than 51 kA/m.

2. Magnetic iron oxides as claimed in claim 1, characterized in that the cobalt content is 2.5 to 6% by weight, based on the coated magnetic iron oxide pigment.

3. A process for the preparation of the magnetic iron oxide pigments containing cobalt claimed in claim 1 or 2, characterized in that a magnetic iron oxide material used as core having the composition $FeO_x$ where 1.33 < x < 1.5 is coated in a first step with a compound containing divalent and trivalent iron, in which the Fe(III):Fe(II) ratio is in the range from 0.01 to less than 2, and the core is coated with a cobalt compound in a second step.

4. A process as claimed in claim 3, characterized in that the Fe(III):Fe(II) ratio is adjusted by the iron salt used.

5. A process as claimed in claim 3, characterized in that the Fe(III):Fe(II) ratio is adjusted by controlled oxidation of Fe(II) before the cobalt is added.

## Revendications

1. Pigments d'oxyde de fer magnétiques avec un revêtement de composé de cobalt caractérisés en ce qu'ils présentent une force coercitive dont la dépendance de la température dans l'intervalle de température de 76 K à 298 K est inférieure à 0,13 kA/mK et en ce que la force coercitive dans une poudre compactée à 0,9 g/cm$^3$ est supérieure à 51 kA/m.

2. Oxydes de fer magnétiques selon la revendication 1, caractérisés en ce que la teneur en cobalt est comprise entre 2,5 et 6 % en poids, rapportée au pigment d'oxyde de fer magnétique du revêtement.

3. Procédé de production des pigments d'oxyde de fer magnétique contenant du cobalt selon l'une des revendications 1 ou 2, caractérisé en ce qu'un matériau de noyau d'oxyde de fer magnétique de composition FeOx avec 1,33 < x < 1,5 est revêtu au cours d'une première étape d'un composé contenant du fer bivalent et du fer trivalent avec le rapport Fe(III):Fe(II) compris entre 0,01 et moins de 2 et est revêtu au cours d'une deuxième étape d'un composé de cobalt.

4. Procédé selon la revendication 3, caractérisé en ce que le rapport Fe(III):Fe(II) utilisé est réglé par le sel de fer utilisé.

**5.** Procédé selon la revendication 3, caractérisé en ce que le rapport Fe(III):Fe(II) est réglé par une oxydation définie de Fe (II) avant l'addition de cobalt.